# EUROPÄISCHE PATENTSCHRIFT

(11) **EP 4 001 527 B1**
(45) Veröffentlichungstag und Bekanntmachung des Hinweises auf die Patenterteilung: **11.10.2023**
(21) Anmeldenummer: 20209339.9
(22) Anmeldetag: 23.11.2020
(51) Int. Cl.: E03D 11/14, F16B 37/08

(54) **WANDHALTER, INSBESONDERE FÜR EIN SANITÄROBJEKT**
WALL HOLDER, IN PARTICULAR FOR A SANITARY OBJECT
SUPPORT MURAL, EN PARTICULIER POUR UN OBJET SANITAIRE

(43) Veröffentlichungstag der Anmeldung: 25.05.2022
(73) Patentinhaber: Nextrend GmbH, 65439 Flörsheim (DE)
(72) Erfinder: GROSS, Norbert, 61389 Schmitten (DE)
(74) Vertreter: Tergau & Walkenhorst Patentanwälte PartGmbB

(56) Entgegenhaltungen:
- EP-A1- 1 975 422
- EP-A2- 3 093 405
- DE-A1-102017 116 113
- US-A- 5 760 338

## Beschreibung

Die Erfindung betrifft einen Wandhalter für ein wandhängendes Objekt, insbesondere ein Sanitärobjekt, speziell ein Toilettenbecken.

Aufgabe der Erfindung ist es, einen einfach herzustellenden und zu montierenden Wandhalter für ein wandhängendes Objekt, insbesondere ein Sanitärobjekt und speziell ein Toilettenbecken, anzugeben, welcher bei hinreichender Stabilität und Belastbarkeit einfach und zuverlässig mit Standardwerkzeug zu montieren ist.

Die Aufgabe wird erfindungsgemäß gelöst durch einen Wandhalter mit den Merkmalen des Anspruchs 1.

Demnach ist ein Wandhalter vorgesehen für ein wandhängendes Objekt, insbesondere ein Sanitärobjekt, speziell ein Toilettenbecken, mit einem einen Hohlraum umschließenden Gehäuse, mit einer Klemmeinrichtung, die zwei durch Federkraft aufspreizbare Klemmelemente aufweist, und mit einem auf die Klemmeinrichtung einwirkenden Betätigungselement, wobei die Klemmeinrichtung in einem komprimierten Zustand entlang einer Einschubrichtung durch eine Einschuböffnung in den Hohlraum einsetzbar ist und sich darin bei gelöstem Betätigungselement infolge der Federkraft derart aufspreizt, dass eine Herausbewegung aus dem Hohlraum blockiert ist, und wobei die in den Hohlraum eingesetzte Klemmeinrichtung durch das Betätigungselement derart komprimierbar ist, dass eine mit einem festen Ende in einer Wand verankerte und mit einem freien Ende in den Hohlraum ragende Befestigungsstange kraft- und/oder formschlüssig zwischen den Klemmelementen fixiert wird.

Auf diese Weise wird ein Wandhalter bereitgestellt, der in Verbindung mit einer in einer Wand verankerten Befestigungsstange eine zuverlässige und belastbare Halterung oder Haltevorrichtung für ein wandhängendes Objekt, insbesondere eine Sanitärobjekt, speziell ein Toilettenbecken, bereitstellt. Die durch Einsatz von Standardwerkzeug, bevorzugt mittelts Sechskantschlüssel, herstellbare und bei Bedarf wieder lösbare Verbindung zwischen dem Gehäuse des Wandhalters und der Befestigungsstange erfolgt dabei zweckmäßigerweise kraft- und/oder formschlüssig gemäß Klemmprinzip. Das Einsetzen der entsprechenden Klemmeinrichtung in das Gehäuse erfolgt vorteilhafterweise durch eine SchnappVerriegelung.

Nach dem Fixieren des Wandhalters am Objekt, vorzugsweise mittels einer Klemmhülse, und dem Aufschieben des Objektes verzahnt (arretiert) sich das Gewinde der Gewindestange bereits im offenen Zustand der Klemmeinrichtung durch das Eigengewicht des Objektes. So muss das Objekt nicht bis zur festen Montage vom Monteur gehalten werden. Benötigte Werkzeuge können mit beiden Händen geführt werden.

In bevorzugter Ausgestaltung wirkt das Betätigungselement derart auf die Klemmeinrichtung ein, dass die Klemmeinrichtung im Montagezustand mit eingeklemmter Befestigungsstange bei der Betätigung des Betätigungselements entgegen der Einschubrichtung relativ zum Gehäuse verschoben und dadurch das Gehäuse in Richtung gegen die Wand verspannt wird. Das heißt, dass beim Festziehen des Betätigungselements der Wandhalter an der Befestigungsstange fixiert wird und zugleich das Objekt mit der Wand verspannt wird.

Vorteilhafterweise weist das jeweilige Klemmelement eine Hälfte einer Gewindebohrung auf, wobei die beiden Hälften sich im komprimierten Zustand (sprich im Klemmzustand) der Klemmeinrichtung zu einer vollständigen Gewindebohrung ergänzen, welche zu einem Außengewinde am freien Ende der Befestigungsstange korrespondiert. Das heißt, die Befestigungsstange ist vorteilhafterweise zumindest in einem in den Wandhalter hineinragenden Abschnitt als Gewindestange ausgeführt. Der Gewindeabschnitt wird bei angespannter bzw. komprimierter Klemmeinrichtung durch die von den Klemmelementen umschlossene Gewindebohrung formschlüssig gegen Herausziehen und kraftschlüssig gegen Herausdrehen gesichert.

In zweckmäßiger Ausgestaltung ist das Betätigungselement als Schraube, Schraubbolzen oder Schraubstift ausgebildet und ragt im Montagezustand entlang einer Einschraubrichtung durch eine im Gehäuse angeordnete Einschrauböffnung in den Hohlraum hinein.

Dabei ist es besonders bevorzugt, wenn eines der Klemmelemente an seiner dem Betätigungselement zugewandten Seite eine Rampe mit einer schräg zur Einschubrichtung und schräg zur Einschraubrichtung verlaufenden Kontaktfläche aufweist, die eine Bewegung des Betätigungselements in Einschraubrichtung in eine Bewegung der komprimierten Klemmeinrichtung entgegen der Einschubrichtung umsetzt.

Vorteilhafterweise wird die Bewegung des jeweiligen Klemmelements im Gehäuse durch Führungsschienen geführt.

In bevorzugter Ausgestaltung weist das Gehäuse einen Gehäuseblock von quaderförmiger Gestalt auf, wobei die Einschuböffnung für die Befestigungsstange und die Einschuböffnung für die Klemmeinrichtung in einander gegenüberliegenden Seitenflächen vorgesehen sind.

Ein Ausführungsbeispiel der Erfindung wird nachfolgend anhand der beigefügten, zum Teil vereinfachten (schematischen) Zeichnungen erläutert. Daraus gehen weitere Merkmale, Aufgaben und Vorteile der Erfindung hervor.

Es zeigt:
- FIG. 1: einen erfindungsgemäßen Wandhalter mit auseinander genommenen Komponenten in perspektivischer Ansicht,
- FIG. 2: den Wandhalter gemäß FIG. 1 mit zusammengesetzten Komponenten im Längsschnitt, hier in einem ersten Betätigungszustand,
- FIG. 3: den Wandhalter im Längsschnitt in einem zweiten Betätigungszustand,
- FIG. 4: den Wandhalter im Längsschnitt in einem dritten Betätigungszustand,
- FIG. 5: ein unteres Klemmelement des Wandhalters in zwei verschiedenen Ansichten, hier mit gegenüber FIG. 1 leicht unterschiedlicher Detailausführung,
- FIG. 6: ein oberes Klemmelement des Wandhalters in zwei verschiedenen Ansichten,
- FIG. 7: eine Hülse des Wandhalters in zwei verschiedenen Ansichten, und
- FIG. 8: mehrere Komponenten des Wandhalters sowie den kompletten Wandhalter in verschiedenen Ansichten, und
- FIG. 9: mehrere aufeinanderfolgende Schritte bei der Befestigung eines Toilettenbeckens mit von zwei erfindungsgemäßen Wandhaltern an einer Wand.

Der in den Figuren dargestellte Wandhalter 2 dient der Befestigung oder Aufhängung eines wandhängenden Objektes, wie eines Sanitärobjektes, insbesondere eines Toilettenbeckens, an einer Wand.

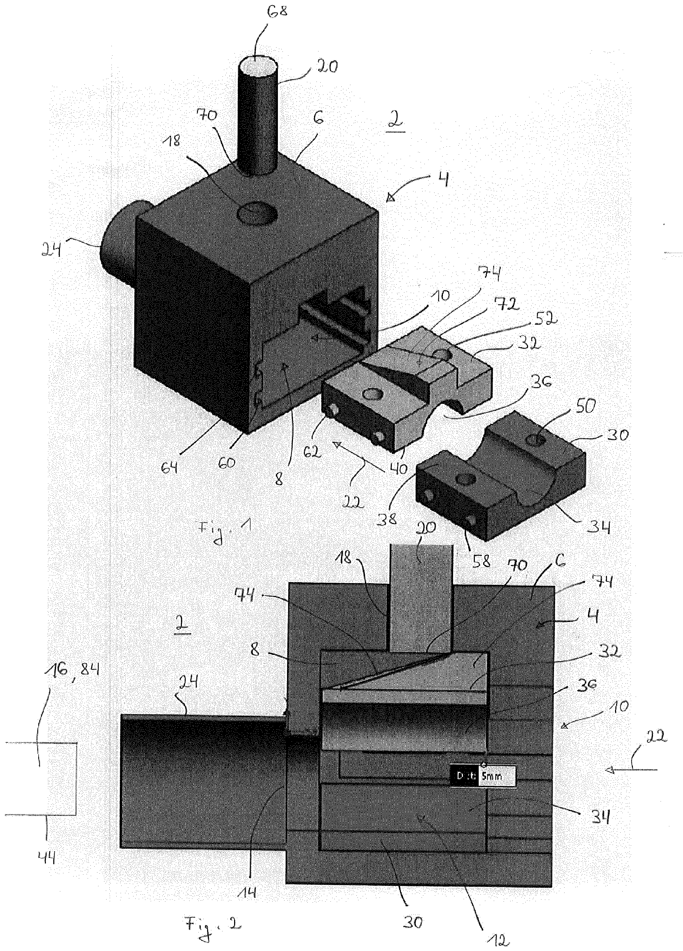

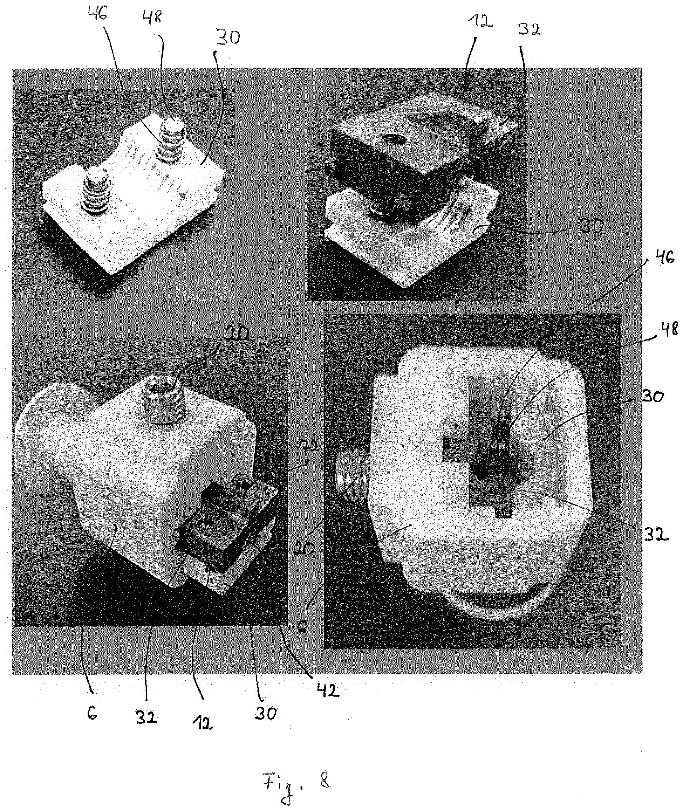

Der Wandhalter 2 umfasst ein Gehäuse 4 mit einem im Wesentlichen quaderförmigen Gehäuseblock 6, welcher innen ausgehöhlt ist, mit sechs senkrecht aufeinander stehenden Seitenflächen. Eine der Seitenflächen bildet bei der in FIG. 1 dargestellten bevorzugten Ausrichtung eine Oberseite, und die ihr gegenüberliegende Seitenfläche bildet eine Unterseite. Der von der Gehäusewand umschlossene Hohlraum 8 ist von einer Seite über eine in die Gehäusewand eingebrachte Öffnung zugänglich. Diese Öffnung dient als Einschuböffnung 10 für eine Klemmeinrichtung 12 (siehe auch FIG. 8). Auf der gegenüberliegenden Seite des Gehäuses 4 weist die Gehäusewand eine weitere Öffnung auf, die einen Eingriff in den Hohlraum 8 ermöglicht. Diese Öffnung dient als Einschuböffnung 14 für das freie Ende einer bevorzugt als Gewindestange 16 ausgebildeten Haltestange oder Befestigungsstange 84 (in FIG. 2 schematisch angedeutet), welche bei der gewöhnlichen Verwendung des Wandhalters 2 am gegenüberliegenden Ende in einer Wand verankert ist. Des Weiteren weist die Gehäusewand an der Oberseite eine in den Hohlraum 8 reichende Öffnung auf, die bevorzugt als Einschrauböffnung 18 ausgebildet ist und zum Einbringen eines auf die Klemmeinrichtung 12 einwirkenden Betätigungselements 20 dient. Der Wandhalter 2 wird mit in das Gehäuse 4 eingesetzter, aber noch gelöster Klemmeinrichtung 12 auf die Gewindestange 16 geschoben, so dass die Klemmeinrichtung 12 die Gewindestange 16 umgreift. Dann wird mit Hilfe des Betätigungselements 20 die Klemmeinrichtung 12 geschlossen oder gespannt und dadurch an der Gewindestange 16 fixiert. Zugleich wird dabei das Gehäuse 4 des Wandhalters 2, und mit ihm das wandhängende Objekt, an die Wand gedrückt und mit ihr verspannt, wie im Folgenden im Detail beschrieben wird.

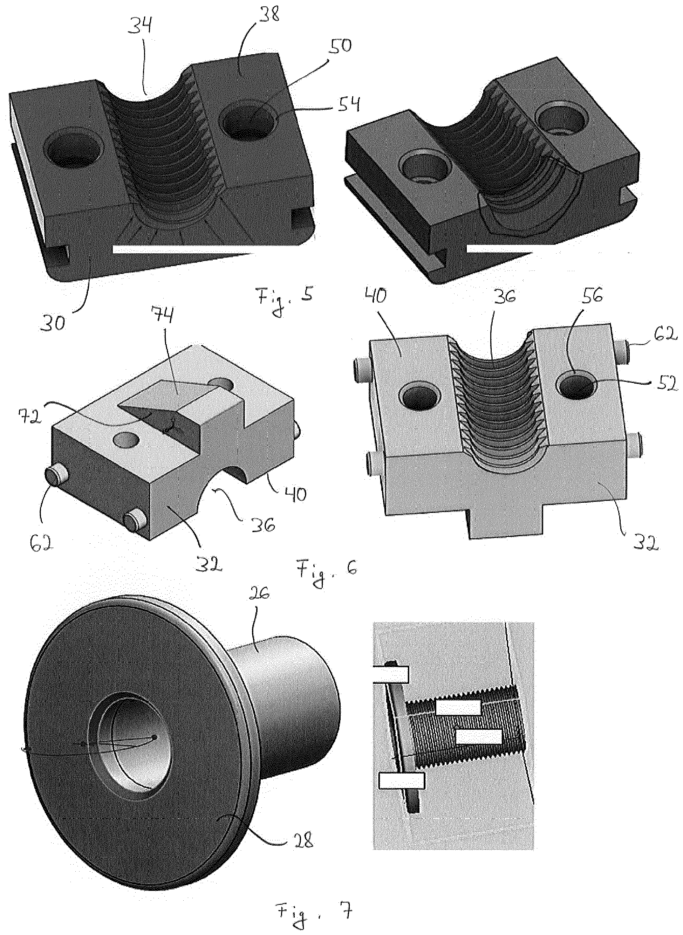

Die Einschuböffnung 14 für die Gewindestange 16 besitzt eine auf den Durchmesser der Gewindestange 16 abgestimmte kreisförmige Umrandung. Konzentrisch um die Einschuböffnung 14 herum ist eine nach außen, in Einschubrichtung 22 der Klemmeinrichtung 12 abstehende hohlzylindrische Röhre 24 oder Hülse an den quaderförmigen Gehäuseblock 6 angeflanscht und vorzugsweise fest mit ihm verbunden. Die Einheit aus Gehäuseblock 6 und Röhre 24 kann auch einstückig gefertigt sein. Die Röhre 24 wird bei der Montage des wandhängenden Objekts von innen durch eine korrespondierende Bohrung oder Ausnehmung in dessen Rückwand gesteckt und dient als Auflage für das Objekt. Die Länge der Röhre 24 ist bevorzugt maximal so groß wie die Dicke der Rückwand, so dass die Röhre 24 nach dem Einsetzen in die Bohrung oder Ausnehmung nicht nach außen übersteht. Die Röhre 24 weist ein Innengewinde auf, so das eine hohlzylindrische Hülse 26 (siehe FIG. 7) mit einem korrespondierenden Außengewinde eingeschraubt werden kann. Die Hülse 26 ist an ihrem vom Wandhalter 2 abgewandten Ende mit einem radial abstehenden ringförmigen Kragen 28 versehen. Die Hülse 26 dient zur Fixierung und Ausrichtung des Wandhalters 2 mit dem Objekt. Werden zwei oder mehr Wandhalter 2 für ein aufzuhängendes Objekt benötigt, gewährleistet der Innendurchmesser der Hülse 26 (vorzugsweise 0,5 mm bis 1 mm größer als der Durchmesser der Gewindestange 16), dass die Halter sich auf demselben Abstand den Gewindestangen 16 zubewegen. So können die Gewindestangen 16 ohne Kollision durch die geöffnete Klemmeinrichtung 12 geschoben werden.

Die Klemmeinrichtung 12 umfasst zwei im Montagezustand übereinander liegende Klemmelemente mit im Wesentlichen quaderförmigem Umriss, nämlich ein unteres Klemmelement 30 und ein oberes Klemmelement 32. Das untere Klemmelement 30 weist an der Oberseite eine in Einschubrichtung 22 orientierte untere Hälfte 34 einer Gewindebohrung auf. Das obere Klemmelement 32 weist an der Unterseite eine dazu korrespondierende, ebenfalls in Einschubrichtung 22 orientierte obere Hälfte 36 einer Gewindebohrung auf. Wenn die beiden Klemmelemente 30, 32 mit ihren Kontaktflächen 38, 40 flach und deckungsgleich aufeinander liegen, ergänzen sich die beiden Hälften 34, 36 zu einer kompletten Gewindebohrung 42, deren Durchmesser zum Durchmesser eines Außengewindes 44 am freien Ende der in der Wand verankerten Gewindestange 16 korrespondiert. Die Gewindebohrung 42 ist gewissermaßen durch einen Längsschnitt in die beiden Hälften 34, 36 separiert. Von der schraubenlinienförmigen Rillung der Gewindebohrung 42 abgesehen ist das jeweilige Klemmelement 30, 32 vorzugsweise spiegelsymmetrisch zu einer Querschnittsmittelebene.

Im Montagezustand werden die beiden Klemmelemente 30, 32, sofern es nicht durch das umliegende Gehäuse 4 oder durch anderweitige Druckausübung verhindert wird, durch zwei zwischen ihnen angeordnete Federelemente, hier in Gestalt von Druckfedern 46 auseinander gedrückt, so dass die Kontaktflächen 38, 40 durch einen Spalt voneinander beabstandet sind (siehe FIG. 5, 6 und 8). Die jeweilige Druckfeder 46 umschließt einen sie stützenden zylindrischen Stift 48, der in einer zugehörigen Ausnehmung 50 oder Bohrung im unteren Klemmelement 30 verankert, insbesondere eingeklemmt ist und senkrecht nach oben von der Kontaktfläche 38 absteht. Das obere Klemmelement 32 weist eine zugehörige Ausnehmung 52 oder Bohrung zur Aufnahme des Stiftes 48 auf. Die Länge der Ausnehmung 52 im oberen Klemmelement 32 ist derart bemessen, dass sie den vom unteren Klemmelement 30 abstehenden Teil des Stiftes 48 vollständig aufnehmen kann. Die Ausnehmung 52 kann das obere Klemmelement 32 insbesondere vollständig durchsetzen, wobei der Stift 48 im zusammengedrückten Zustand der Klemmeinrichtung 12 bevorzugt oben nicht übersteht. Im gespreizten Zustand bei vollständig expandierter Druckfeder 46 steht der Stift 48 oben etwas über die Druckfeder 46 hinaus und greift in die Ausnehmung 52 im oberen Klemmelement 32 hinein. Damit ist außerhalb des Gehäuses 4 ein loser Verbund der die Klemmeinrichtung 12 bildenden Komponenten - unteres Klemmelement 30, oberes Klemmelement 32, Druckfedern 46 und Stifte 48 - ermöglicht. Die Ausnehmungen 50, 52 im unteren Klemmelement 30 und im oberen Klemmelement 32 sind jeweils in einen oberflächennahen Bereich über den Stiftdurchmesser hinaus verbreitert, so dass die jeweilige Druckfeder 46 im komprimierten Zustand in den verbleibenden ringförmigen Zwischenräumen 54, 56 zwischen Stift 48 und Klemmelementkörper aufnehmbar ist und das obere Klemmelement 32 im Bereich der Kontaktflächen 40 spaltfrei anliegend auf die Kontaktflächen 38 des unteren Kontaktelements 30 gedrückt werden kann.

Mit anderen Worten sind die bevorzugt als geschliffene Zylinderstifte ausgebildeten Stifte 48 mit dem unteren Klemmelement 30 mittels Presspassung fest verbunden. Im oberen Klemmelement 32 bewegt sich der jeweilige Stift 48 mittels angebrachter Übergangspassung. Diese Passung unterstützt, dass beide Klemmelemente 30, 32 beim Zusammenpressen der Klemmeinrichtung 12 geführt aufeinander zulaufen und sich nicht verkanten können.

Der Hohlraum 8 und die Einschuböffnung 10 sind zur Aufnahme der zusammengesetzten Klemmeinrichtung 12 ausgelegt. Sie sind beide derart geformt und dimensioniert (Passform), dass die durch Druckausübung komprimierte Klemmeinrichtung 12 mit aufeinander liegenden Klemmelementen 30, 32 durch die Einschuböffnung 10 in der Gehäusewand hindurch entlang der Einschubrichtung 22 in den Hohlraum 8 geschoben oder gesteckt werden kann. Bei Erreichen eines Endanschlags in Einschubrichtung 22 kann sich die Klemmeinrichtung 12 unter Beibehaltung ihrer räumlichen Orientierung aufspreizen, indem die Druckfedern 46 das untere Klemmelement 30 und das obere Klemmelement 32 einen Spalt breit auseinanderdrücken. Im aufgespreizten Zustand ist eine Rückbewegung der Klemmeinrichtung 12 entgegen der Einschubrichtung 22 durch die Umrandung der Einschuböffnung 10 blockiert. Die obere Umrandung der Einschuböffnung 10 wirkt dabei als Sperrkante 82. Erst durch hinreichend weite Abwärtsbewegung des die Einschrauböffnung 18 in der Gehäuseoberseite durchdringenden Betätigungselements 20 wird die Klemmeinrichtung 12 wieder so weit zusammengedrückt, dass sie zum einen die durch die Einschuböffnung 14 hineinragende Gewindestange 16 kraftschlüssig fixiert und zum anderen durch die Einschuböffnung 14 hindurchpasst und entgegen der Einschubrichtung 22 relativ zum Gehäuse 4 bewegt werden kann.

Im vorliegenden Beispiel ist das untere Klemmelement 30 gemäß FIG. 1 mit seitlich abstehenden Führungsstiften 58 oder Führungsfedern versehen, die in korrespondierende Führungsschienen 60 oder Führungsnuten in den Seitenwänden des Gehäuse eingreifen. Die geradlinigen Führungsschienen 60 sind entlang der Einschubrichtung 22 ausgerichtet. Alternativ kann das untere Klemmelement 30 gemäß FIG. 5 mit seitlichen Nuten versehen sein, die mit entsprechenden Federn in den Seitenwänden des Gehäuses 4 wechselwirken. Durch die Führung wird die Beweglichkeit des unteren Klemmelements 30 eingeschränkt. Es kann nur in oder entgegen der Einschubrichtung 22 relativ zum Gehäuse 4 verschoben werden. Eine Verschiebung in vertikaler Richtung, sprich eine Änderung der Höhenlage, oder ein Verkippen ist nicht möglich. Das obere Klemmelement 32 ist in analoger Ausgestaltung mit seitlich abstehenden Führungsstiften 62 versehen, die in korrespondierende Führungsschienen 64 oder Führungsnuten in den Seitenwänden des Gehäuse 4 eingreifen. Allerdings weisen die Führungsschienen 64 neben einem geradlinigen Teil, der parallel zu dem Führungsschienen 60 entlang der Einschubrichtung 22 ausgerichtet ist, noch dazu senkrechte Abzweigungen 66 nach oben auf. Die abzweigenden Abschnitte sind derart angeordnet und bemessen, dass die bereits erwähnte Aufspreizung der Klemmeinrichtung 12 erfolgen kann, wenn diese in Einschubrichtung 22 bis zur Anschlagsposition in das Gehäuse 4 eingeschoben ist, indem sich dann das obere Klemmelement 32 durch die Federkraft der Druckfedern 46 nach oben vom unteren Klemmelement 30 abhebt.

Das Betätigungselement 20 ist bevorzugt als Schraube, Schraubbolzen oder Schraubstift ausgebildet, bevorzugt mit einem Innensechskant am oberen Ende 68 (sogenannte Inbusschraube) und mit kegelförmig angespitzten unterem Ende 70 (in der schematischen Darstellung gemäß FIG. 1 bis 4 ist die Spitze nicht sichtbar). Das Außengewinde des Betätigungselements 20 korrespondiert zu einem Innengewinde in der zugehörigen Einschrauböffnung 18 des Gehäuses 4. Das heißt, das Betätigungselement 20 wird in die Einschrauböffnung 18 eingeschraubt und ragt mit seiner Spitze - je nach Anzahl der Schraubendrehungen entsprechend tief - in den Hohlraum 8 hinein. Wenn das Betätigungselement 20 hinreichend weit in den Hohlraum 8 abgesenkt wird, drückt sein unteres Ende 70 von oben auf das obere Klemmelement 32 und spannt es gegen das untere Klemmelement 30. Dadurch wird eine durch die Einschuböffnung 14 greifende Gewindestange 16 zwischen den beiden Klemmelementen 30, 32 eingespannt, wobei ein Gewindeabschnitt der Gewindestange 16 zwischen der aus den beiden Hälften 34, 36 zusammengesetzten Gewindebohrung 42 liegt und darin kraftschlüssig fixiert ist. An der Oberseite des oberen Klemmelements 32 - in der Region, die durch das Betätigungselement 20 beaufschlagt wird - ist eine Rampe 72 mit einer schiefen Ebene (Schräge) ausgebildet, die entgegen der Einschubrichtung 22 ansteigt. Mit anderen Worten ist bei der in das Gehäuse 4 eingesetzten Klemmeinrichtung 12 die Kontaktfläche 74 für das Betätigungselement 20 gegenüber der Einschubrichtung 22 geneigt. Das zur Einschuböffnung 10 gerichtete Ende der Rampe 72 liegt höher als das gegenüberliegende, zur Einschuböffnung 14 gerichtete Ende.

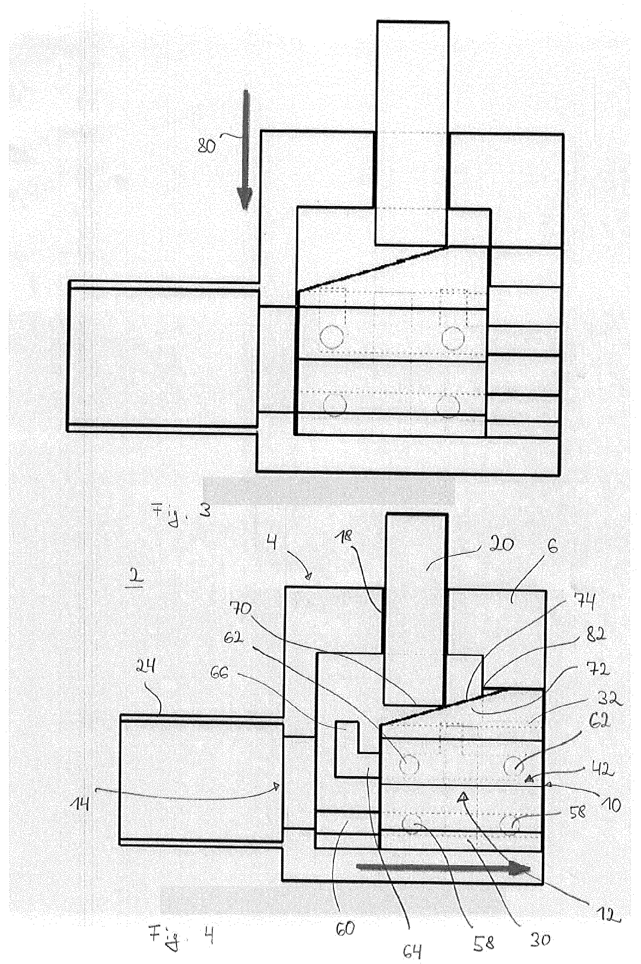

Die Ausgestaltung ist derart, dass die im Hohlraum 8 sitzende, aufgespreizte Klemmeinrichtung 12 beim Einschrauben (oder allgemein: Absenken) des Betätigungselements 20 zunächst derart zusammengedrückt wird (siehe FIG. 3), bis das obere Klemmelement 32 im Bereich der Kontaktflächen 38, 40 auf dem unteren Klemmelement 30 aufliegt, wobei die sich aus den beiden Gewindehälften zusammensetzende Gewindebohrung 42 die umschlossene Gewindestange 16 einspannt. Zugleich wird durch das Zusammendrücken erreicht, dass die obere Umrandung des oberen Klemmelements 32 unter die korrespondierende obere Umrandung der Einschuböffnung 10 absinkt, und dass die seitlichen Führungsstifte 62 am oberen Klemmelement 32 sich aus den vertikalen Abzweigungen 66 in die parallel zur Einschubrichtung 22 ausgerichteten Führungsschienen 64 bewegen. Damit wird eine mögliche Bewegung der Klemmeinrichtung 12 entgegen der Einschubrichtung 22 freigegeben und auch forciert. Beim weiteren Einschrauben des Betätigungselements 20, sprich bei der Bewegung in Vorschubrichtung bzw. Einschraubrichtung 80, wird nämlich infolge der geometrischen Zwangskräfte die Klemmeinrichtung 12 - relativ zum Gehäuse 4 - entgegen der Einschubrichtung 22 in oder durch die Einschuböffnung 10 bewegt und gegebenenfalls etwas darüber hinaus (siehe FIG. 4). Da nun die in einer Wand fixierte Gewindestange 16 zugleich in der Klemmeinrichtung 12 fixiert ist, bedeutet dies, dass das Gehäuse 4 sich zur Wand hinbewegt. Dabei wird die zwischen dem Gehäuseblock 6 und der Wand liegende Rückwand des aufgehängten Objekts an die Wand gepresst.

Das Betätigungselement 20 orientiert sich durch die Schräge oder Rampe 72 auf die gegenüberliegende Seite der Klemmeinrichtung 12. So ist gewährleistet, dass die Klemmeinrichtung 12 über die gesamte Fläche geschlossen bleibt.

Mit anderen Worten: Bewegt sich das Betätigungselement 20 in Einschraubrichtung 80 nach unten in den Hohlraum 8, so bildet das obere Klemmelement 32 nach dem Schließen eine komprimierte Einheit mit dem unteren Klemmelement 30. Die aus beiden Klemmelementen 30, 32 zusammengesetzte Klemmeinrichtung 12 bildet dann gewissermaßen einen Schlitten, der beim weiteren Einschrauben des Betätigungselements 20 entgegen der Einschubrichtung 22 (relativ zum Gehäuse 4) bewegt wird und somit das zu haltende Objekt gegen die Wand drückt. Die Mitnahme des unteren Klemmelements 30 durch das obere Klemmelement 32 erfolgt über die Stifte 48. Daher bestehen die Stifte 48 bevorzugt aus einem sehr festen Material (vorzugsweise Metall), damit sie nicht abscheren. Dadurch ist eine Doppelfunktion der Stifte 48 aus vertikaler Führung und horizontaler Kraftübertragung (als Mitnehmer) gewährleistet. Das heißt, die Stifte 48 ermöglichen die zum Öffnen und Schließen erforderliche Relativbeweglichkeit der beiden Klemmelemente 30, 32 in/entgegen der Einschraubrichtung 80 des Bestätigungselements 20, verhindern sie aber in/entgegen der Einschubrichtung 22. Die seitlichen Führungen im Gehäuse 4 bewirken dabei, dass der Anpressdruck immer im senkrechten Winkel zur Wand wirkt und garantieren so einen kipp- und wackelfreien Halt.

Wie beschrieben, werden die beiden Klemmelemente 30 und 32 durch das Betätigungselement 20 komprimiert und auch auf dieser Position gehalten, so dass die umschlossene Gewindestange 16 fixiert bleibt. Auch das Gehäuse 4 übernimmt oder unterstützt diese Aufgabe, sobald die komprimierte Klemmeinrichtung 12 gegen die Einschubrichtung 22 verfahren ist. Die passgenaue Umrandung der Einschuböffnung 10 (deren Ober- und Unterkante), in der die Klemmeinrichtung 12 dann zumindest teilweise steckt, bewirkt nämlich einen Formschluss, der die Klemmeinrichtung 12 am Aufspreizen hindert.

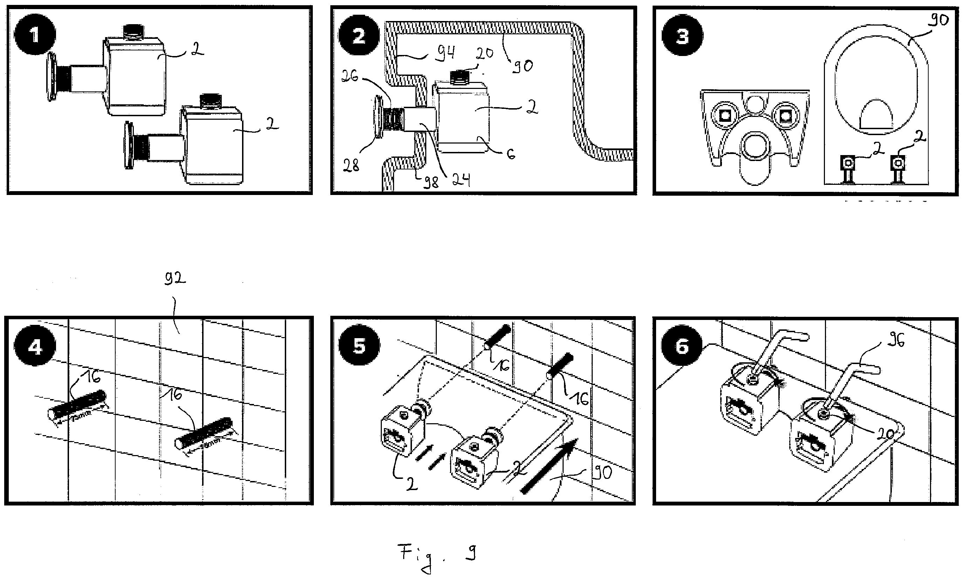

Im Folgenden wird unter Bezug auf FIG. 9 beispielhaft die Befestigung eines Toilettenbeckens 90 an einer Wand 92 beschrieben.

Zur Montage und bestimmungsgemäßen Verwendung des Wandhalters 2 wird die aus den beiden Klemmelementen 30, 32, den Druckfedern 46 und Stiften 48 bestehende Klemmeinrichtung 12 zusammengesetzt und lagerrichtig in den Hohlraum 8 des Gehäuses 4 eingesetzt. Das Betätigungselement 20 wird in die Einschrauböffnung 18 eingeschraubt aber noch nicht angezogen (Schritt 1 in FIG. 9). Dann wird der auf diese Weise vorbereite Wandhalter 2 derart von innen durch eine Rückwand 94 des aufzuhängenden Objekts gesetzt, dass die Röhre 24 die entsprechende Bohrung oder Aussparung in der Rückwand des Objekts durchgreift. Von der anderen Seite wird nun die Hülse 26 in die Röhre 24 eingeschraubt, bis sich entweder ein loser Sitz (wie in Schritt 2 von FIG. 9) ergibt, oder ein Klemmsitz, bei dem der Kragen 28 um die Bohrung oder Ausnehmung herum auf der einen Seite der Rückwand 94 und der Gehäuseblock 6 auf der anderen Seite anliegt und sich daran abstützt. Damit ist der Wandhalter 2 am aufzuhängenden Objekt fixiert, und letzteres ist bereit für die Wandaufhängung. Der Kragen 28 liegt dabei vorzugsweise in einer Vertiefung 98 der Rückwand 94 des Objekts, steht also nicht nach außen über, so dass das Objekt möglichst spaltfrei an der Wand 92 anliegen kann (Schritt 3 in FIG. 9). Der Kragen 28 kann auch als Wandstütze dienen.

Dann wird das Objekt mit dem an ihm fixierten Wandhalter 2 in der gewünschten Ausrichtung auf die in der Wand 92 fixierte Gewindestange 16 geschoben (Schritte 4 und 5 in FIG. 9), so dass deren Außengewinde 44 zwischen den Hälften 34, 36 der Gewindebohrung 42 in der Klemmeinrichtung 12 liegt. Das heißt, die Seitenfläche des Gehäuseblocks 6 mit der Einschuböffnung 14 für die Gewindestange 16 ist - durch die dazwischen liegende Rückwand 94 des Objekts beabstandet - der Wand 92 zugewandt, und die Seitenfläche mit der Einschuböffnung 10 für die Klemmeinrichtung 12 liegt gegenüberliegend, von der Wand angewandt. Die Seitenfläche mit der Einschrauböffnung 18 für das Betätigungselement 20 liegt im Montagezustand oben. Das Objekt kann bei noch geöffneter Klemmeinrichtung 12 ohne Werkzeuge direkt bis an die Wand auf die Gewindestange 16 aufgeschoben werden, ohne dass der Gewindeanfang gefunden werden muss oder es zum Verkanten kommen kann. Nach dem Aufschieben des Objektes verzahnt (arretiert) sich das Außengewinde 44 der Gewindestange 16 bereits im offenen Zustand der Klemmeinrichtung 12 durch das Eigengewicht des Objektes. So muss das Objekt nicht bis zur festen Montage vom Monteur gehalten werden. Benötigte Werkzeuge zum Anziehen des Betätigungselements 20 können mit beiden Händen geführt werden.

Dann wird wie oben beschrieben durch Einschrauben des Betätigungselements 20 die Gewindestange 16 in der Klemmeinrichtung 12 fixiert und das Objekt mit der Wand 92 verspannt. Das Einschrauben erfolgt hier mit Hilfe eines Sechskantschlüssels 96 (sogenannter Inbusschlüssel), der in die korrespondierende Innensechskant-Ausnehmung am oberen Ende 68 des Betätigungselements 20 eingesetzt wird (Schritt 6 in FIG. 9). Nach dem Einschrauben und Festziehen ist der Wandhalter 2 in der Lage, ein wandhängendes Objekt wie etwa ein Toilettenbecken 90 zu tragen. Dabei liegt das Objekt auf der vom Gehäuseblock 6 abstehenden Röhre 24 und ggf. auf der Oberseite des Gehäuseblocks 6 auf.

Das Gehäuse 4 ist bevorzugt als Spritzgussbauteil aus einem Kunststoff hergestellt, insbesondere aus Polyoxymethylen oder Polyacetal. Entsprechendes gilt für die Hülse 26 und das untere Klemmelement 30. Das Innengewinde der Einschrauböffnung 18 kann nach Art eines Einsatzes durch eine Gewindehülse verwirklicht sein. Dabei handelt es sich bevorzugt um eine metallische Hülse, die in das umliegende Kunststoffmaterial des Gehäuses 4 eingegossen ist. Das obere Klemmelement 32 besteht im Hinblick auf die zu erwartende mechanische Belastung bevorzugt aus einem metallischen Werkstoff, ebenso die Druckfedern 46 und die Stifte 48 sowie das Betätigungselement 20.

### Bezugszeichenliste

- 2: Wandhalter
- 4: Gehäuse
- 6: Gehäuseblock
- 8: Hohlraum
- 10: Einschuböffnung
- 12: Klemmeinrichtung
- 14: Einschuböffnung
- 16: Gewindestange
- 18: Einschrauböffnung
- 20: Betätigungselement
- 22: Einschubrichtung
- 24: Röhre
- 26: Hülse
- 28: Kragen
- 30: Klemmelement
- 32: Klemmelement
- 34: untere Hälfte
- 36: obere Hälfte
- 38: Kontaktfläche
- 40: Kontaktfläche
- 42: Gewindebohrung
- 44: Außengewinde
- 46: Druckfeder
- 48: Stift
- 50: Ausnehmung
- 52: Ausnehmung
- 54: Zwischenraum
- 56: Zwischenraum
- 58: Führungsstift
- 60: Führungsschiene
- 62: Führungsstift
- 64: Führungsschiene
- 66: Abzweigung
- 68: oberes Ende
- 70: unteres Ende
- 72: Rampe
- 74: Kontaktfläche
- 80: Einschraubrichtung
- 82: Sperrkante
- 84: Befestigungsstange
- 90: Toilettenbecken
- 92: Wand
- 94: Rückwand
- 96: Sechskantschlüssel
- 98: Vertiefung

## Patentansprüche

1. Wandhalter (2) für ein wandhängendes Objekt, insbesondere ein Sanitärobjekt, speziell ein Toilettenbecken, mit einem einen Hohlraum (8) umschließenden Gehäuse (4), mit einer Klemmeinrichtung (12), die zwei durch Federkraft aufspreizbare Klemmelemente (30, 32) aufweist, und mit einem auf die Klemmeinrichtung (12) einwirkenden Betätigungselement (20), wobei die Klemmeinrichtung (12) in einem komprimierten Zustand entlang einer Einschubrichtung (22) durch eine Einschuböffnung (10) in den Hohlraum (8) einsetzbar ist und sich darin bei gelöstem Betätigungselement (20) infolge der Federkraft derart aufspreizt, dass eine Herausbewegung aus dem Hohlraum (8) blockiert ist, und wobei die in den Hohlraum (8) eingesetzte Klemmeinrichtung (12) durch das Betätigungselement (20) derart komprimierbar ist, dass eine mit einem festen Ende in einer Wand verankerte und mit einem freien Ende in den Hohlraum (8) ragende Befestigungsstange (84) kraft- und/oder formschlüssig zwischen den Klemmelementen (30, 32) fixiert wird.

2. Wandhalter (2) nach Anspruch 1, wobei das Betätigungselement (20) derart auf die Klemmeinrichtung (12) einwirkt, dass die Klemmeinrichtung (12) im Montagezustand mit eingeklemmter Befestigungsstange (84) bei der Betätigung des Betätigungselements (20) entgegen der Einschubrichtung (22) relativ zum Gehäuse verschoben (4) und dadurch das Gehäuse (4) gegen die Wand verspannt wird.

3. Wandhalter (2) nach Anspruch 1 oder 2, wobei das jeweilige Klemmelement (30, 32) eine Hälfte (34, 36) einer Gewindebohrung (42) aufweist, und wobei die beiden Hälften (34, 36) sich im komprimierten Zustand der Klemmeinrichtung (12) zu einer vollständigen Gewindebohrung (42) ergänzen, welche zu einem Außengewinde (44) am freien Ende der Befestigungsstange (84) korrespondiert.

4. Wandhalter (2) nach einem der vorangehenden Ansprüche, wobei das Betätigungselement (20) als Schraube, Schraubbolzen oder Schraubstift ausgebildet ist und im Montagezustand entlang einer Einschraubrichtung (80) durch eine im Gehäuse (4) angeordnete Einschrauböffnung (18) in den Hohlraum (8) hineinragt.

5. Wandhalter (2) nach Anspruch 4, wobei eines der Klemmelemente (30, 32) an seiner dem Betätigungselement (20) zugewandten Seite eine Rampe (72) mit einer schräg zur Einschubrichtung (22) und schräg zur Einschraubrichtung (80) verlaufenden Kontaktfläche (74) aufweist, die eine Bewegung des Betätigungselements (20) in Einschraubrichtung (80) in eine Bewegung der komprimierten Klemmeinrichtung (12) entgegen der Einschubrichtung (22) umsetzt.

6. Wandhalter (2) nach einem der vorangehenden Ansprüche, wobei die Bewegung des jeweiligen Klemmelements (30, 32) im Gehäuse (4) durch Führungselemente, insbesondere Führungsschienen (60, 64), geführt ist.

7. Wandhalter (2) nach einem der vorangehenden Ansprüche, wobei das Gehäuse (4) einen Gehäuseblock (6) von quaderförmiger Gestalt aufweist, wobei eine Einschuböffnung (14) für die Befestigungsstange (84) und die Einschuböffnung (10) für die Klemmeinrichtung (12) in einander gegenüberliegenden Seitenflächen vorgesehen sind.

8. Wandhalter (2) nach Anspruch 7 mit einer vom Gehäuse (4) abstehenden, die Einschuböffnung (14) für die Befestigungsstange (84) umschließenden Röhre (24), in die eine Hülse (26) zur Befestigung des Wandhalters (2) am Objekt einschraubbar ist.

9. Wandhalter (2) nach einem der vorangehenden Ansprüche, wobei zwischen den beiden Klemmelementen (30, 32) mindestens eine Druckfeder (46) angeordnet ist.

10. Wandhalter (2) nach Anspruch 9, wobei die jeweilige Druckfeder (46) einen Stift (48) umgreift, der mit Presspassung in dem einen Klemmelement (30) fixiert ist und mit Übergangpassung verschieblich in dem anderen Klemmelement (32) gelagert ist.

## Claims

1. A wall holder (2) for a wall-mounted object, particularly a sanitary object, especially a toilet bowl, comprising a housing (4) that encloses a cavity (8), a clamping device (12) with two clamping elements (30, 32) that can be spread apart by a spring force, and an actuating element (20) that acts upon the clamping device (12), wherein the clamping device (12) can, in a compressed state, be inserted into the cavity (8) along an inserting direction (22) through an insertion opening (10) and, when the actuating element (20) is released, spreads apart in said cavity as a result of the spring force in such a way that a movement out of the cavity (8) is blocked, and wherein the clamping device (12) inserted into the cavity (8) can be compressed by means of the actuating element (20) in such a way that a mounting rod (84), which is anchored in a wall with a fixed end and protrudes into the cavity (8) with a free end, is non-positively and/or positively fixed between the clamping elements (30, 32).

2. The wall holder (2) according to claim 1, wherein the actuating element (20) acts upon the clamping device (12) in such a way that the clamping device (12) is, in the installed state with clamped mounting rod (84), displaced relative to the housing (4) opposite to the inserting direction (22) and the housing (4) is thereby tensioned against the wall when the actuating element (20) is actuated.

3. The wall holder (2) according to claim 1 or 2, wherein the respective clamping element (30, 32) has one half (34, 36) of a threaded bore (42), and wherein the two halves (34, 36) complement one another so as to form a complete threaded bore (42), which corresponds to an external thread (44) on the free end of the mounting rod (84), in the compressed state of the clamping device (12).

4. The wall holder (2) according to one of the preceding claims, wherein the actuating element (20) is realized in the form of a screw, a threaded bolt or a threaded pin and, in the installed state, protrudes into the cavity (8) along a screw-in direction (80) through a screw-in opening (18) arranged in the housing (4).

5. The wall holder (2) according to claim 4, wherein one of the clamping elements (30, 32) has, on its side facing the actuating element (20), a ramp (72) with a contact surface (74) that extends obliquely to the inserting direction (22) and obliquely to the screw-in direction (80) and converts a movement of the actuating element (20) in the screw-in direction (80) into a movement of the compressed clamping device (12) opposite to the inserting direction (22).

6. The wall holder (2) according to one of the preceding claims, wherein the movement of the respective clamping element (30, 32) in the housing (4) is guided by guide elements, particularly guide rails (60, 64).

7. The wall holder (2) according to one of the preceding claims, wherein the housing (4) has a housing block (6) of cuboid shape, and wherein an insertion opening (14) for the mounting rod (84) and the insertion opening (10) for the clamping device (12) are provided in opposite lateral surfaces.

8. A wall holder (2) according to claim 7 with a pipe (24) that protrudes from the housing (4) and encloses the insertion opening (14) for the mounting rod (84), wherein a sleeve (26) for mounting the wall holder (2) on the object can be screwed into said pipe.

9. The wall holder (2) according to one of the preceding claims, wherein at least one pressure spring (46) is arranged between the two clamping elements (30, 32).

10. The wall holder (2) according to claim 9, wherein the respective pressure spring (46) encompasses a pin (48) that is fixed in one clamping element (30) with a press fit and displaceably mounted in the other clamping element (32) with a transition fit.

## Revendications

1. Support mural (2) pour un objet accroché au mur, notamment un objet sanitaire, spécialement une cuvette des toilettes, pourvu d'un boîtier (4) entourant une cavité (8), pourvu d'un système de serrage (12), qui comporte deux éléments de serrage (30, 32) déployables par force de ressort et pourvu d'un élément d'actionnement (20) agissant sur le système de serrage (12), dans un état comprimé, le système de serrage (12) étant susceptible d'être engagé à travers un orifice d'insertion (10) dans la cavité (8), le long d'une direction d'insertion (22) et lorsque l'élément d'actionnement (20) est dégagé, se déployant dans celle-ci suite à la force de ressort, de telle sorte qu'un déplacement hors de la cavité (8) soit bloqué et le système de serrage (12) engagé dans la cavité (8) étant comprimable par l'élément d'actionnement (20), de telle sorte qu'une barre de fixation (84) ancrée dans un mur par une extrémité fixe et saillant dans la cavité (8) par une extrémité libre soit fixée par complémentarité de force et / ou de forme entre les éléments de serrage (30, 32).

2. Support mural (2) selon la revendication 1, l'élément d'actionnement (20) agissant sur le système de serrage (12) de telle sorte que lorsqu'il est monté avec la barre de fixation (84) enserrée, lors de l'actionnement de l'élément d'actionnement (20), le système de serrage (12) soit déplacé à l'encontre de la direction d'insertion (22) par rapport au boîtier (4) et que de ce fait, le boîtier (4) soit contraint contre le mur.

3. Support mural (2) selon la revendication 1 ou 2, l'élément de serrage (30, 32) respectif comportant une moitié (34, 36) d'un taraudage (42) et lorsque le système de serrage (12) est comprimé, les deux moitiés (34, 36) se complétant en un taraudage (42) entier, lequel correspond à un filetage (44) sur l'extrémité libre de la barre de fixation (84).

4. Support mural (2) selon l'une quelconque des revendications précédentes, l'élément d'actionnement (20) étant conçu sous la forme d'une vis, d'un boulon fileté ou d'un clou torsadé et lorsqu'il est monté le long d'une direction de vissage (80), saillant dans la cavité (8), à travers un orifice de vissage (18) placé dans le boîtier (4).

5. Support mural (2) selon la revendication 4, sur sa face dirigée vers l'élément d'actionnement (20), l'un des éléments de serrage (30, 32) comportant une rampe (72), pourvue d'une surface de contact (74) s'écoulant en oblique par rapport à la direction d'insertion (22) et en oblique par rapport à la direction de vissage (80), qui transforme un déplacement de l'élément d'actionnement (20) dans la direction de vissage (80) en un déplacement du système de serrage (12) comprimé à l'encontre de la direction d'insertion (22).

6. Support mural (2) selon l'une quelconque des revendications précédentes, le déplacement de l'élément de serrage (30, 32) respectif dans le boîtier (4) étant guidé par des éléments de guidage, notamment des rails de guidage (60, 64).

7. Support mural (2) selon l'une quelconque des revendications précédentes, le boîtier (4) comportant un bloc (6) de boîtier de forme parallélépipédique, un orifice d'insertion (14) pour la barre de fixation (84) et l'orifice d'insertion (10) pour le système de serrage (12) étant prévus dans des surfaces latérales mutuellement opposées.

8. Support mural (2) selon la revendication 7, pourvu d'un tube (24) faisant saillie à partir du boîtier (4), entourant l'orifice d'insertion (14) pour la barre de fixation (84), dans lequel peut se visser une douille (26), destinée à fixer le support mural (2) sur l'objet.

9. Support mural (2) selon l'une quelconque des revendications précédentes, entre les deux éléments de serrage (30, 32) étant placé au moins un ressort de pression (46).

10. Support mural (2) selon la revendication 9, le ressort de pression (46) respectif entourant un goujon (48) qui est fixé par ajustement serré dans l'un élément de serrage (30) et qui est logé par ajustement de transition en étant déplaçable dans l'autre élément de serrage (32).
